# EUROPEAN PATENT APPLICATION

(11) **EP 2 268 075 A1**
(43) Date of publication of application: **29.12.2010**
(21) Application number: 09737689.1
(22) Date of filing: 28.04.2009
(51) Int. Cl.: H04W 28/02, H04L 12/56

(54) **METHOD AND APPARATUS FOR ADJUSTMENT OF TRANSMISSION TIME INTERVAL**

(30) Priority: 30.04.2008 CN 200810067046
(71) Applicant: Huawei Technologies Co., Ltd., Longgang District, Shenzhen Guangdong 518129 (CN)
(72) Inventor: YU, Jiang, Shenzhen Guangdong 518129 (CN); GUO, Fangfu, Shenzhen Guangdong 518129 (CN); YAO, Yao, Shenzhen Guangdong 518129 (CN)
(74) Representative: Charles, Glyndwr
(86) International application number: PCT/CN2009/071533
(87) International publication number: WO 2009/132579

(57) **Abstract**

A method for adjusting a Transmission Time Interval (TTI) is provided. The method mainly includes: acquiring a current traffic flow of a High Speed Uplink Packet Access (HSUPA) channel, comparing the acquired current traffic flow with a preset threshold, and adjusting the TTI of the HSUPA channel according to the current TTI and the comparison result. An apparatus and a radio network controller for adjusting the TTI are also provided. By using the method, apparatus and radio network controller, the TTI of the HSUPA channel may be dynamically adjusted according to the actual traffic flow, so that the TTI may meet the requirement of data transmission and the utilization of the channel resources of a base station is improved as far as possible.

## Description

This application claims priority to Chinese Patent Application No. 200810067046.X, filed with the Chinese Patent Office on April 30, 2008 and entitled "Method and Apparatus for Adjusting Transmission Time Interval", which is incorporated herein by reference in its entirety.

### Field of the Invention

The present invention relates to a mobile communications technology, and in particular, to a technology for adjusting a Transmission Time Interval (TTI) of a High Speed Uplink Packet Access (HSUPA) channel.

### Background of the Invention

The 3^{rd} Generation Partnership Project (3GPP) R6 introduces HSUPA to implement the uplink high speed data transmission. One of the main features is that an air interface uses the short frame, the TTI of which is 10 ms or 2 ms. When a service is bore on an HSUPA channel, a uplink peak rate in the case that the TTI of the HSUPA channel is 2 ms is higher than the case of 10 ms.

In the solution of the prior art, when a service is bore on an HSUPA channel, the TTI of the HSUPA channel is fixedly configured and does not change after the configuration. That is, the TTI is always 2 ms or 10 ms. However, the prior art has at least the following problems: The HSUPA channel fixedly configured with a TTI causes the waste of channel resource of the base station or affects the Quality of Service (QoS).

### Summary of the Invention

Embodiments of the present invention provide a method, an apparatus and a radio network controller for adjusting the TTI to dynamically adjust the TTI of an HSUPA channel according to the current TTI and the actual traffic flow, so that the TTI may meet the requirement of data transmission and the utilization of the channel resources of the base station is improved as far as possible.

An embodiment of the present invention provides a method for adjusting a TTI. The method includes the following steps:
acquiring a current traffic flow of an HSUPA channel;
comparing the acquired current traffic flow with a preset threshold; and
adjusting a TTI of the HSUPA channel according to a current TTI and the comparison result.

An embodiment of the present invention further provides an apparatus for adjusting a TTI. The apparatus includes:
an acquiring unit, configured to acquire a current traffic flow of a High Speed Uplink Packet Access (HSUPA) channel;
a comparing unit, configured to compare the acquired current traffic flow with a preset threshold; and
a radio resource control entity, configured to adjust a TTI of the HSUPA channel according to a current TTI and the comparison result.

The apparatus for adjusting the TTI may be set in a radio network controller.

By using the method, apparatus and radio network controller for adjusting a TTI provided by the embodiments of the present invention, the TTI of an HSUPA channel is adjusted according to the current TTI and the current traffic flow of the HSUPA channel, so that the TTI may be dynamically adjusted according to the actual traffic flow. Therefore, the requirement of data transmission is met and the utilization of the channel resources of the base station is improved as far as possible.

### Brief Description of the Drawings

FIG. 1 illustrates a flowchart of a method for adjusting the TTI in an embodiment of the present invention;
FIG. 2 illustrates a flowchart of a method for adjusting the TTI in another embodiment of the present invention;
FIG. 3 illustrates a flowchart of a method for adjusting the TTI in another embodiment of the present invention;
FIG. 4 illustrates a flowchart of a method for adjusting the TTI in another embodiment of the present invention;
FIG. 5 illustrates a flowchart of a method for adjusting the TTI in another embodiment of the present invention;
FIG. 6 illustrates a flowchart of a method for adjusting the TTI in another embodiment of the present invention;
FIG. 7 illustrates a flowchart of a method for adjusting the TTI in another embodiment of the present invention;
FIG. 8 illustrates a structure diagram of an apparatus for adjusting the TTI in an embodiment of the present invention;
FIG. 9 illustrates a structure diagram of an apparatus for adjusting the TTI in another embodiment of the present invention; and
FIG. 10 illustrates a structure diagram of an apparatus for adjusting the TTI in another embodiment of the present invention.

### Detailed Description of the Embodiments

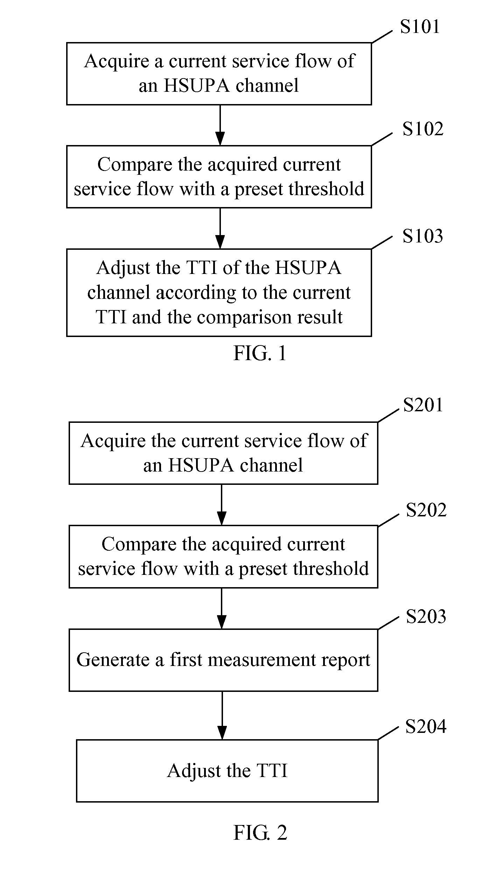

An embodiment of the present invention provides a method for adjusting a TTI. As illustrated in FIG. 1, the method mainly includes the following steps:
S 101. Acquire a current traffic flow of an HSUPA channel.

Herein, the current traffic flow of the HSUPA channel may be represented by a traffic flow correctly received in a unit time. For example, if a measurement period is preset, and a traffic flow correctly received in the measurement period is acquired, the current traffic flow of the HSUPA channel may be represented as a quotient of the traffic flow correctly received in the measurement period and the measurement period, that is, current traffic flow of the HSUPA channel = traffic volume correctly received in the measurement period / measurement period.
S102. Compare the acquired current traffic flow with a preset threshold.

Further, the preset threshold may be one threshold value or two different threshold values. To avoid the ping-pong phenomenon, different threshold values may be used according to the current TTI for comparison. For example, if the current TTI of the HSUPA channel is 2 ms, a first threshold may be used for comparison; and if the current TTI of the HSUPA channel is 10 ms, a second threshold may be used for comparison. The specific values of the first and second thresholds may be set according to the actual requirements. In general, the first threshold value may be less than the second threshold value.
S103. Adjust the TTI of the HSUPA channel according to the current TTI and the comparison result.

If the current TTI of the HSUPA channel is 2 ms, and the current traffic flow is less than the first threshold, the TTI of the HSUPA channel is adjusted to 10 ms; and if the current TTI of the HSUPA channel is 10 ms, and the current traffic flow is greater than the second threshold, the TTI of the HSUPA channel is adjusted to 2 ms.

It can thus be seen that the method for adjusting the TTI provided by the embodiment of the present invention adjusts the TTI according to the current TTI and the current traffic flow of the HSUPA channel, so that the TTI of the HSUPA channel may be dynamically adjusted according to the actual traffic flow, thus the requirement of data transmission can be met and the utilization of the channel resources of the base station can be improved.

The acquisition of the current traffic flow of the HSUPA channel is usually executed by layer 2, the comparison of the acquired current traffic flow with the preset threshold is executed by layer 2 or layer 3, and the adjustment of the TTI of the HSUPA channel is executed by layer 3 according to the current TTI and the comparison result, as detailed below.

An embodiment of the present invention provides a method for adjusting the TTI. As illustrated in FIG. 2, the method may include the following steps:
S201. Acquire a current traffic flow of an HSUPA channel.

For example, if a measurement period is preset, and a traffic flow correctly received in the measurement period is acquired, the current traffic flow of an HSUPA channel is a quotient of the traffic flow correctly received in the measurement period and the measurement period, that is, current traffic flow of the HSUPA channel = traffic volume correctly received in the measurement period / measurement period.
S202. Compare the acquired current traffic flow with a preset threshold.

The preset threshold may be one threshold value or two different threshold values. To avoid the ping-pong phenomenon, different threshold values may be used according to the current TTI for determination. For example, if the current TTI of the HSUPA channel is 2 ms, a first threshold is used for comparison; and if the current TTI of the HSUPA channel is 10 ms, a second threshold is used for comparison. The specific values of the first and second thresholds may be set according to the actual requirements. In general, the first threshold value may be less than the second threshold value.

Because the threshold may be different when the current TTI of the HSUPA channel is different, the process of comparison is also different. For example, if the current TTI of an HSUPA channel is 2 ms, whether the current traffic flow is less than the first threshold is determined, and if the current TTI of an HSUPA channel is 10 ms, whether the current traffic flow is greater than the second threshold is determined.

The process of comparison above may be executed by a Radio Link Control (RLC) entity or a Media Access Control (MAC) entity at layer 2.
S203. Generate a first measurement report.

When the comparison result is that the current traffic flow is less than the first threshold (the current TTI is 2 ms) or greater than the second threshold (the current TTI is 10 ms), the first measurement report may be generated according to the comparison result and reported from layer 2 to layer 3. The content of the first measurement report may be the comparison result of the current traffic flow with the preset flow threshold, or triggering information for triggering layer 3 to adjust the TTI. The triggering information is information generated according to the comparison result for triggering layer 3 to adjust the TTI.
S204. Adjust the TTI.

Layer 3 adjusts the TTI after receiving the first measurement report reported by layer 2. For example, if the current TTI of the HSUPA channel is 2 ms, and the current traffic flow is less than the first threshold, the TTI of the HSUPA channel is adjusted to 10 ms; and if the current TTI of the HSUPA channel is 10 ms, and the current traffic flow is greater than the second threshold, the TTI of the HSUPA channel is adjusted to 2 ms.

Further, the TTI of the HSUPA channel may be adjusted through a Radio Bearer (RB) reconfiguration message, that is, layer 3 sends the RB reconfiguration message according to the first measurement report of layer 2 to adjust the TTI of the HSUPA channel.

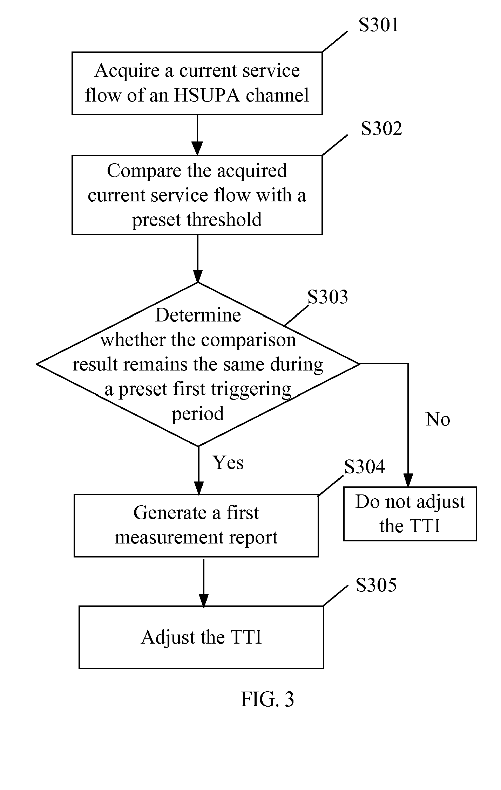

Another embodiment of the present invention provides a method for adjusting the TTI. As illustrated in FIG. 3, the method may include the following steps:
S301. Acquire a current traffic flow of an HSUPA channel.
S302. Compare the acquired current traffic flow with a preset threshold.

Here, the process from S301 to S302 is substantially the same as the description from S201 to S202, and thus no further description is provided.
S303. During a preset first triggering period, determine whether the comparison result remains the same, and if the comparison result remains the same during the preset first triggering period, S304 is executed, or else, the current TTI may not be adjusted.

Further, to further improve the accuracy of the comparison result, when the comparison result is that the current traffic flow is less than the first threshold (the current TTI is 2 ms) or greater than the second threshold (the current TTI is 10 ms), the TTI may be not adjusted immediately but after a waiting time. During the waiting time, the steps of acquiring the current traffic flow of an HSUPA channel and comparing the acquired current traffic flow with the preset threshold continue according to the method above. The waiting time may be called a first triggering period that is longer than or equal to the measurement period, for example, an integral multiple of the measurement period.

If the current TTI is 2 ms and the comparison result in S302 is that the current traffic flow is less than the first threshold, S301 and S302 continue, and whether the comparison result remains the same is determined during the preset first triggering period; if the comparison result remains the same, S304 is executed, or else, the current TTI is not adjusted.

If the current TTI is 10 ms and the comparison result in S302 is that the current traffic flow is greater than the second threshold, S301 and S302 continue , and whether the comparison result remains the same is determined during the preset first triggering period; if the comparison result remains the same, S304 is executed, or else, the current TTI is not adjusted.
S304. Generate a first measurement report.

Here, the process and manner of generating the first measurement report are substantially the same as that in S203, and thus no further description is provided.
S305. Adjust the TTI.

Here, the process and manner of adjusting the TTI are substantially the same as that of S204, and thus no further description is provided.

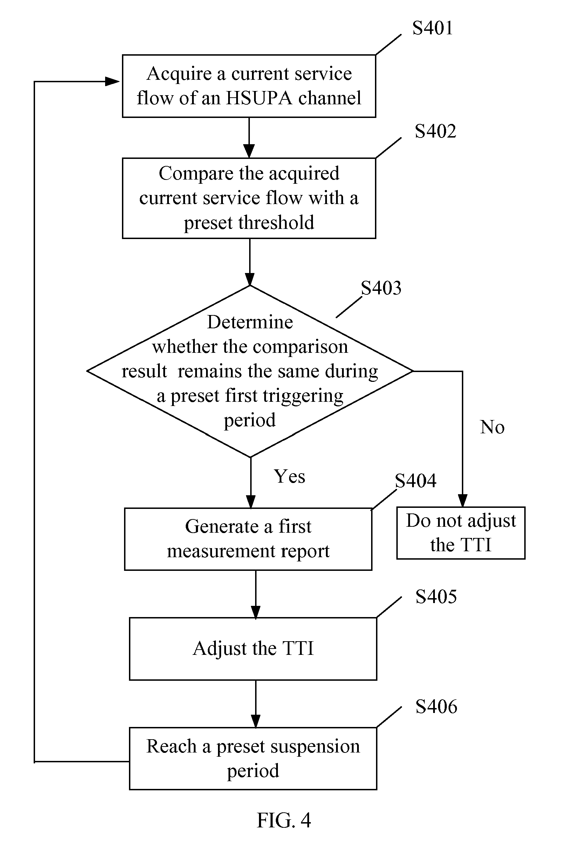

Because the traffic flow will be changed during the adjustment of the TTI, to avoid a misreport caused by the inaccurate measurement of a flow during the adjustment of the TTI, an embodiment of the present invention further provides another method for adjusting the TTI. As illustrated in FIG. 4, the method may include the following steps:
S401. Acquire a current traffic flow of an HSUPA channel.
S402. Compare the acquired current traffic flow with a preset threshold.
S403. During the preset first triggering period, determine whether the comparison result remains the same, and if the comparison result remains the same during the preset first triggering period, execute S404, or else, do not adjust the current TTI.
S404. Generate a first measurement report.
S405. Adjust the TTI.

Here, the process from S401 to S405 is substantially the same as the description from S301 to S305, and thus no further description is provided.
S406. Repeat from S401 to S405 after reaching a preset suspension period.

That is, after the adjustment of the TTI, the acquisition of the current traffic flow and subsequent steps are not performed immediately but after a waiting time. The waiting time may be called a suspension period. During the preset suspension period, the step of acquiring of the current traffic flow and subsequent steps are stopped, and S401 to S405 are repeated when the preset suspension period ends.

In addition, it should be noted that the preset parameters, such as the first and second thresholds, measurement period, first triggering period and suspension period, in the embodiments above may be preconfigured during the setup of a service.

It can thus be seen that the methods for adjusting the TTI provided by the embodiments in FIG. 2 to FIG. 4 adjust the TTI according to the current TTI and the current traffic flow of an HSUPA channel, so that the TTI of the HSUPA channel may be dynamically adjusted according to the actual traffic flow to meet the requirement of data transmission and improve the utilization of the channel resources of the base station as far as possible.

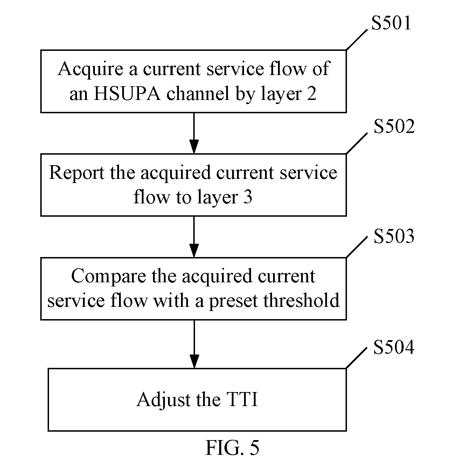

In the methods for adjusting the TTI provided by the embodiments in FIG. 2 to FIG. 4, the current traffic flow of an HSUPA channel is acquired by layer 2 and the current traffic flow is compared with a preset threshold by layer 2. The process of comparison may also be executed by layer 3. An embodiment of the present invention provides another method for adjusting the TTI. As illustrated in FIG. 5, the method may include the following steps:
S501. Acquire a current traffic flow of an HSUPA channel by layer 2.

Herein, the current traffic flow of the HSUPA channel may be represented by the traffic flow correctly received in a unit time. For example, if a measurement period is preset, and a traffic flow correctly received in the measurement period is acquired, the current traffic flow of an HSUPA channel may be represented as a quotient of the traffic flow correctly received in the measurement period and the measurement period, that is, current traffic flow of the HSUPA channel = traffic volume correctly received in the measurement period / measurement period. The process of acquiring the current traffic flow may be executed by the RLC entity or the MAC entity of layer 2.
S502. Report the acquired current traffic flow to layer 3.

The current traffic flow of the HSUPA channel acquired by layer 2 is reported to layer 3. The acquired current traffic flow of the HSUPA channel may be reported when the measurement period or a preset reporting period ends. The preset reporting period is longer than or equal to a measurement period, in general, an integral multiple of the measurement period.
S503. Compare the acquired current traffic flow with a preset threshold.

The process of comparison may be executed by layer 3, for example, an RRC entity. The layer 3 acquires the current traffic flow of the HSUPA channel according to the report from layer 2, and the compares the acquired current traffic flow with the preset threshold.

Because the threshold may be different when the current TTI of the HSUPA channel is different, the process of comparison is also different. For example, if the current TTI of an HSUPA channel is 2 ms, whether the current traffic flow is less than a first threshold is determined, and if the current TTI of an HSUPA channel is 10 ms, whether the current traffic flow is greater than a second threshold is determined.
S504. Adjust the TTI.

If the current TTI of the HSUPA channel is 2 ms, and the current traffic flow is less than the first threshold, the TTI of the HSUPA channel is adjusted to 10 ms; and if the current TTI of the HSUPA channel is 10 ms, and the current traffic flow is greater than the second threshold, the TTI of the HSUPA channel is adjusted to 2 ms.

Further, the TTI of the HSUPA channel may be adjusted by using an RB reconfiguration message, that is, layer 3 sends the RB reconfiguration message to adjust the TTI of the HSUPA channel.

To further improve the accuracy of the comparison result, when the comparison result in S503 is that the current traffic flow is less than the first threshold (the current TTI is 2 ms) or greater than the second threshold (the current TTI is 10 ms), whether the comparison result remains the same is determined during the preset second triggering period rather than reported immediately. The detailed descriptions on the basis of embodiments are as follows.

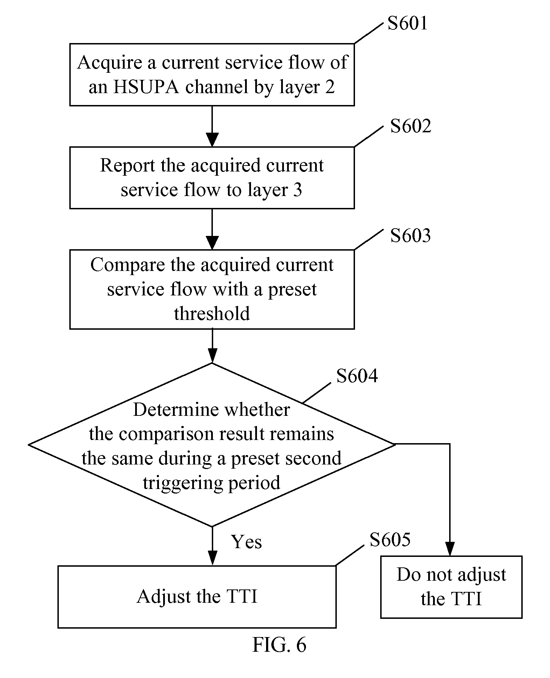

An embodiment of the present invention provides another method for adjusting the TTI. As illustrated in FIG. 6, the method may include the following steps:
S601. Acquire a current traffic flow of an HSUPA channel by layer 2.
S602. Report the acquired current traffic flow to layer 3.
S603. Compare the acquired current traffic flow with a preset threshold.

The process from S601 to S603 is substantially the same as the description from S501 to S503, and thus no further description is provided.
S604. During the preset second triggering period, determine whether the comparison result remains the same, and if the comparison result remains the same during the preset second triggering period, execute S605, or else, do not adjust the current TTI.

When the comparison result in S603 is that the current traffic flow is less than the first threshold (the current TTI is 2 ms) or greater than the second threshold (the current TTI is 10 ms), the TTI is not adjusted immediately, but whether the comparison result remains the same is determined during the preset second triggering period.

The second triggering period is longer than or equal to a measurement period if no reporting period is set, usually, an integral multiple of the measurement period; and the second triggering period is longer than or equal to the reporting period if a reporting period is set, for example, an integral multiple of the reporting period.
S605. Adjust the TTI.

The process of adjusting TTI is substantially the same as that in S504, and thus no further description is provided.

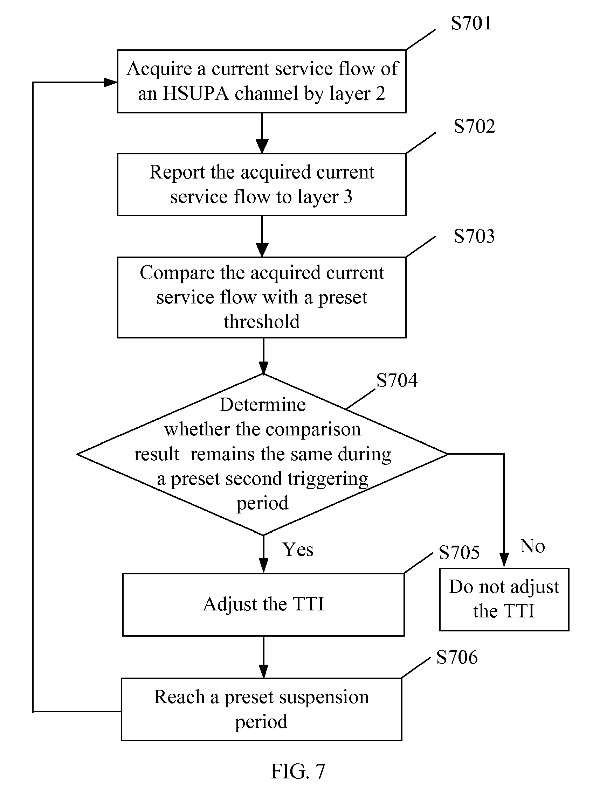

Because the traffic flow will be changed during the adjustment of the TTI, to avoid a misreport caused by the inaccurate measurement of a flow during the adjustment of the TTI, an embodiment of the present invention further provides another method for adjusting the TTI. As illustrated in FIG. 7, the method may include the following steps:
S701. Acquire a current traffic flow of an HSUPA channel by layer 2.
S702. Report the acquired current traffic flow to layer 3.
S703. Compare the acquired current traffic flow with a preset threshold.
S704. During the preset second triggering period, determine whether the comparison result remains the same, and if the comparison result remains the same during the preset second triggering period, execute S705, or else, do not adjust the current TTI.
S705. Adjust the TTI.

The process from S701 to S705 is substantially the same as the description from S501 to S503, and thus no further description is provided.
S706. Repeat from S701 to S705 after reaching a preset suspension period.

That is, after the adjustment of the TTI, the acquisition of the current traffic flow and subsequent steps are not performed immediately but after a waiting time. The waiting time may be called a suspension period. During the preset suspension period, the step of acquiring of the current traffic flow and subsequent steps are stopped, and steps S701 to S705 are repeated when the preset suspension period ends.

It should be noted that the preset parameters, such as the first and second thresholds, measurement period, reporting period, second triggering period and suspension period, in the embodiments in FIG. 5 to FIG. 7 may be preconfigured during the setup of a service.

It can thus be seen that the method for adjusting the TTI provided by the embodiment of the present invention adjusts the TTI according to the current TTI and the current traffic flow of an HSUPA channel, so that the TTI of the HSUPA channel may be dynamically adjusted according to the actual traffic flow to meet the requirement of data transmission and improve the utilization of the channel resources of the base station as far as possible.

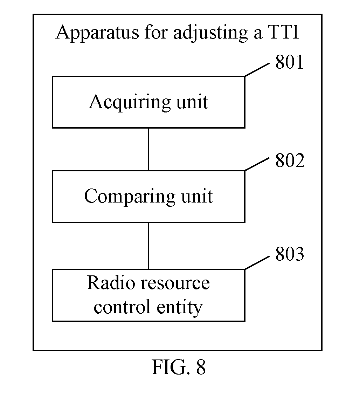

An embodiment of the present invention provides an apparatus for adjusting the TTI. As illustrated in FIG. 8, the apparatus for adjusting the TTI may include an acquiring unit 801, a comparing unit 802, and a radio resource control entity 803.

The acquiring unit 801 is configured to acquire a current traffic flow of an HSUPA channel. The preceding method embodiments may be referred to for the specific process of acquisition.

The comparing unit 802 is configured to compare the acquired current traffic flow from the acquiring unit 801 with a preset threshold.

Herein, the preset threshold may be one threshold value or two different threshold values. To avoid the ping-pong phenomenon, different threshold values may be used according to the current TTI for determination. For example, if the current TTI of the HSUPA channel is 2 ms, the first threshold is used for comparison, and if the current TTI of the HSUPA channel is 10 ms, the second threshold is used for comparison. The specific values of the first and second thresholds may be set according to the actual requirements, and in general, the first threshold is less than the second threshold.

Because the threshold may be different when the current TTI of the HSUPA channel is different, the process of comparison is also different. For example, if the current TTI of an HSUPA channel is 2 ms, whether the current traffic flow is less than a first threshold is determined, and if the current TTI of an HSUPA channel is 10 ms, whether the current traffic flow is greater than a second threshold is determined.

The radio resource control entity 803 is configured to adjust the TTI of the HSUPA channel according to the current TTI and the comparison result from the comparing unit 802.

If the current TTI of the HSUPA channel is 2 ms, and the current traffic flow is less than the first threshold, the TTI of the HSUPA channel is adjusted to 10 ms; and if the current TTI of the HSUPA channel is 10 ms, and the current traffic flow is greater than the second threshold, the TTI of the HSUPA channel is adjusted to 2 ms.

The radio resource control entity may adjust the TTI of the HSUPA channel through an RB reconfiguration message.

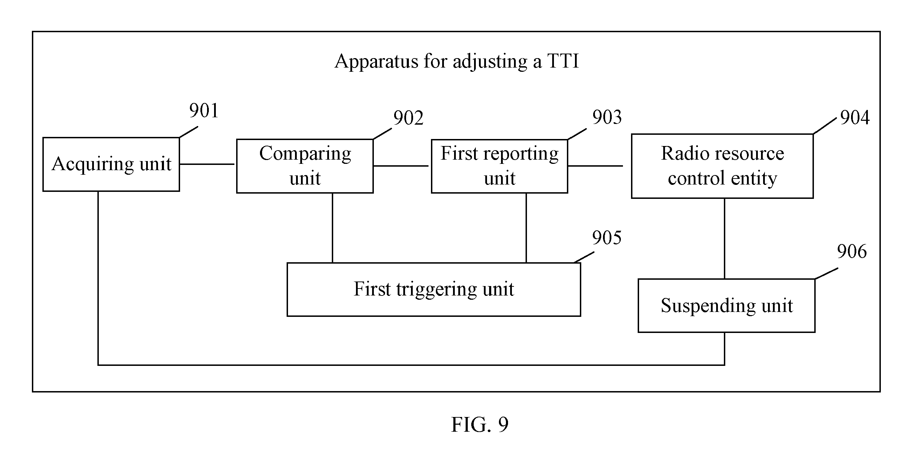

Further, to improve the accuracy of the comparison result, an embodiment of the present further provides another apparatus for adjusting the TTI. As illustrated in FIG. 9, the apparatus for adjusting the TTI may include an acquiring unit 901, a comparing unit 902, a first reporting unit 903, and a radio resource control entity 904.

The acquiring unit 901 is configured to acquire a current traffic flow of an HSUPA channel. The preceding method embodiments may be referred to for the specific process of acquisition.

The comparing unit 902 is configured to compare the acquired current traffic flow from the acquiring unit 901 with a preset threshold. The preceding method embodiments may be referred to for the process of comparison..

The first reporting unit 903 is configured to generate a first measurement report according to the comparison result from the comparing unit 902.

The content of the first measurement report may be the comparison result of the current traffic flow with the preset flow threshold, or triggering information for triggering to adjust the TTI.

The radio resource control entity 904 is configured to adjust the TTI of the HSUPA channel according to the current TTI and the first measurement report generated by the first reporting unit 903. The preceding method embodiments may be referred to for the process of adjusting the TTI.

Further, to improve the accuracy of the comparison result, the apparatus for adjusting the TTI may further include a first triggering unit 905.

The first triggering unit 905 is configured to determine whether the comparison result of the comparing unit 902 remains the same during a preset first triggering period. If the comparison result remains the same during the preset first triggering period, the first triggering unit 905 triggers the first reporting unit 903 to generate the first measurement report according to the comparison result of the comparing unit 902.

In addition, because the traffic flow will be changed during the adjustment of the TTI, to avoid a misreport caused by the inaccurate measurement of a flow during the adjustment of the TTI, the apparatus for adjusting the TTI may further include a suspending unit 906. The suspending unit 906 is configured to instruct the acquiring unit 901 to continue to acquire the current traffic flow after the preset suspension period ends. That is, during the preset suspension period, the acquisition of the current traffic flow and subsequent steps are stopped, and the acquisition of the current traffic flow and subsequent steps are repeated when the preset suspension period ends.

It should be noted that the preset parameters, such as the first and second thresholds, measurement period, first triggering period and suspension period, in the embodiment may be preconfigured by the radio resource control entity during the setup of a service.

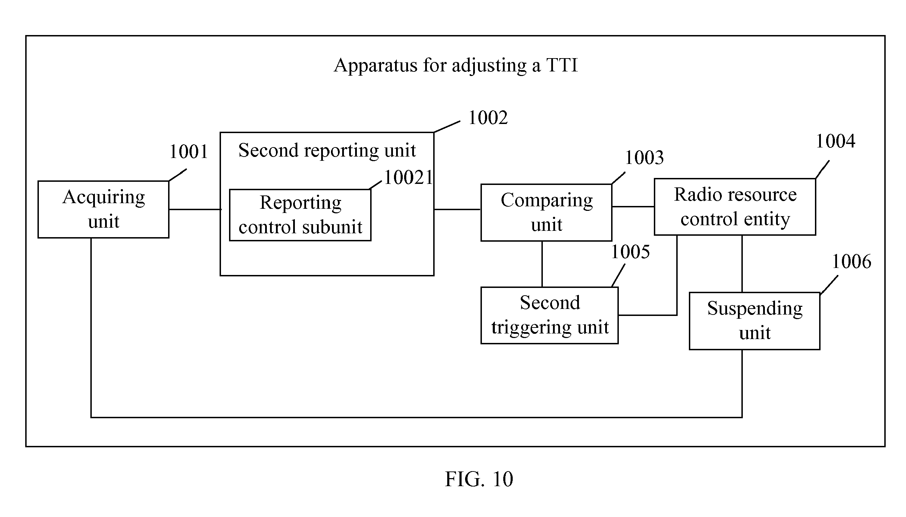

An embodiment of the present invention provides another apparatus for adjusting the TTI. As illustrated in FIG. 10, the apparatus for adjusting the TTI may include an acquiring unit 1001, a second reporting unit 1002, a comparing unit 1003, and a radio resource control entity 1004.

The acquiring unit 1001 is configured to acquire a current traffic flow of an HSUPA channel. The preceding method embodiments may be referred to for the specific process of acquisition.

The second reporting unit 1002 is configured to send the current traffic flow acquired by the acquiring unit 1001.

The comparing unit 1003 is configured to compare the current traffic flow with a preset threshold according to the contents sent from the second reporting unit 1002. The preceding method embodiments may be referred to for the process of comparison.

The radio resource control entity 1004 is configured to adjust the TTI of the HSUPA channel according to the current TTI and the comparison result from the comparing unit 1003. The preceding method embodiments may be referred to for the specific process of acquisition may be referred to for the process of adjusting the TTI.

Herein, the second reporting unit 1002 is configured to directly report the acquired current traffic flow of the HSUPA channel when the measurement period or the preset reporting period ends, so the second reporting unit 1002 may further include a reporting control subunit 10021.The reporting control subunit 10021 is configured to instruct the second reporting unit 1002 to report the acquired current traffic flow of the HSUPA channel when the preset reporting period ends, where the reporting period is longer than or equal to a measurement period, in general, an integral multiple of the measurement period.

Further, to improve the accuracy of the comparison result, the apparatus for adjusting the TTI may further include a second triggering unit 1005.

The second triggering unit 1005 is configured to determine whether the comparison result of the comparing unit 1003 remains the same during a preset second triggering period. If the comparison result of the comparing unit 1003 remains the same during the preset second triggering period, the second triggering unit 1005 triggers the radio resource control entity 1004 to adjust the TTI. If the comparison result of the comparing unit 1003 does not remain the same during the preset second triggering period, do not adjust the TTI. The second triggering period is longer than or equal to a measurement period if no reporting period is set, usually, an integral multiple of the measurement period; and the second triggering period is longer than or equal to the reporting period if a reporting period is set, for example, an integral multiple of the reporting period.

Because the traffic flow will be changed during the adjustment of the TTI, to avoid a misreport caused by the inaccurate measurement of a flow during the adjustment of the TTI, the apparatus for adjusting the TTI may further include a suspending unit 1006.

The suspending unit 1006 is configured to instruct the acquiring unit 1001 to continue to acquire the current traffic flow after a preset suspension period ends. That is, during the preset suspension period, the acquisition of the current traffic flow and subsequent steps are stopped.

It should be noted that the preset parameters, such as the first and second thresholds, measurement period, reporting period, second triggering period and suspension period, in the embodiment may be preconfigured by the radio resource control entity during the setup of a service.

In addition, an embodiment of the present invention further provides a radio network controller, and the radio network controller includes any one of the apparatuses for adjusting the TTI in the embodiments above.

In conclusion, the method, apparatus and radio network controller provided by the embodiments of the present invention adjust the TTI according to the current TTI and the current traffic flow of an HSUPA channel, so the TTI of the HSUPA channel can be dynamically adjusted according to the actual traffic flow to meet the requirement of data transmission and improve the utilization of the channel resources of the base station as far as possible.

Those skilled in the art may understand that the process of adjusting the TTI in the embodiments above may be executed by a program instructing the corresponding hardware. The program may be stored in a readable storage medium. When the program runs, the corresponding steps in the methods above are executed. The storage medium may be a Read Only Memory/Random Access Memory (ROM/RAM), a magnetic disk, or a Compact Disk-Read Only Memory (CD-ROM).

It is apparent that persons skilled in the art can make various modifications and variations to the invention without departing from the scope of the invention. The present invention is intended to cover the modifications and variations provided that they fall within the scope of protection defined by the following claims or their equivalents.

## Claims

1. A method for adjusting a Transmission Time Interval, TTI, comprising:
acquiring a current traffic flow of a High Speed Uplink Packet Access, HSUPA, channel;
comparing the acquired current traffic flow with a preset threshold; and
adjusting a TTI of the HSUPA channel according to a current TTI and the comparison result.

2. The method according to claim 1, wherein the step of acquiring the current traffic flow of the HSUPA channel comprises:
acquiring a quotient of the traffic volume correctly received within a measurement period and the measurement period, and the quotient is taken as the current traffic flow of the HSUPA channel.

3. The method according to claim 2, wherein:
the preset threshold includes a first threshold and a second threshold, wherein the first threshold is less than the second threshold;
if the current TTI of the HSUPA channel is a first TTI and the current traffic flow is less than the first threshold, the TTI of the HSUPA channel is adjusted to a second TTI; or
if the current TTI of the HSUPA channel is the second TTI and the current traffic flow is greater than the second threshold, the TTI of the HSUPA channel is adjusted to the first TTI;
wherein the first TTI is less than the second TTI.

4. The method according to claim 1, wherein the step of adjusting the TTI of the HSUPA channel further comprises: adjusting the TTI of the HSUPA channel through a Radio Bearer, RB, reconfiguration message.

5. The method according to any one of claims 1 to 4, wherein the step of acquiring the current traffic flow of the HSUPA channel and the step of comparing the acquired current traffic flow with the preset threshold are executed by layer 2, and the step of adjusting the TTI of the HSUPA channel is executed by layer 3.

6. The method according to claim 5, further comprising:
generating a first measurement report according to the comparison result , wherein the first measurement report is the comparison result or triggering information, and the triggering information is generated according to the comparison result and used for triggering to adjust the TTI of the HSUPA channel.

7. The method according to claim 6, further comprising:
determining whether the comparison result remains the same during a preset first triggering period; and
generating the first measurement report if the comparison result remains the same during the preset first triggering period;
wherein the first triggering period is an integral multiple of the measurement period.

8. The method according to any one of claims 1 to 4, wherein the step of acquiring the current traffic flow of the HSUPA channel is executed by layer 2, and the steps of comparing the acquired current traffic flow with the preset threshold and adjusting the TTI of the HSUPA channel are executed by layer 3.

9. The method according to claim 8, further comprising:
sending the acquired current traffic flow from layer 2 to layer 3 when a preset reporting period ends, wherein the preset reporting period is an integral multiple of the measurement period.

10. The method according to claim 8, further comprising:
determining whether the comparison result remains the same during a second triggering period, and adjusting the TTI if the comparison result remains the same during the second triggering period; wherein the second triggering period is an integral multiple of the measurement period.

11. The method according to claim 1, after the step of adjusting the TTI of the HSUPA channel, further comprising:
repeatedly executing the step of acquiring the current traffic flow of the HSUPA channel and subsequent steps after a preset waiting time, wherein the waiting time is a preset suspension period.

12. An apparatus for adjusting a Transmission Time Interval, TTI, comprising:
an acquiring unit, configured to acquire a current traffic flow of a High Speed Uplink Packet Access, HSUPA, channel;
a comparing unit, configured to compare the acquired current traffic flow with a preset threshold; and
a radio resource control entity, configured to adjust a TTI of the HSUPA channel according to a current TTI and the comparison result.

13. The apparatus according to claim 12, further comprising:
a first reporting unit, configured to generate a first measurement report according to the comparison result of the comparing unit, wherein the radio resource control entity adjusts the TTI of the HSUPA channel according to the current TTI and the first measurement report.

14. The apparatus according to claim 13, further comprising:
a first triggering unit, configured to determine whether the comparison result of the comparing unit remains the same during a preset first triggering period, and trigger the first reporting unit to generate the first measurement report according to the comparison result of the comparing unit if the comparison result of the comparing unit remains the same during the preset first triggering period.

15. The apparatus according to claim 12, further comprising:
a suspending unit, configured to instruct the acquiring unit to continue to acquire the current traffic flow after a preset suspension period ends.

16. A radio network controller, comprising the apparatus for adjusting a TTI according to any one of claims 12 to 15.
